# EUROPEAN PATENT APPLICATION

(11) **EP 3 070 121 A2**
(43) Date of publication of application: **21.09.2016**
(21) Application number: 16159848.7
(22) Date of filing: 11.03.2016
(51) Int. Cl.: C08L 9/08, C08K 3/04, C08K 3/36, C08L 21/00, C08L 21/02, C08L 101/02, C08L 101/12, B60C 1/00

(54) **RUBBER COMPOSITION FOR TIRE TREADS AND TIRE MANUFACTURED USING THE SAME**

(30) Priority: 19.03.2015 KR 20150038001
(71) Applicant: Hankook Tire Co., Ltd., Seoul 135-723 (KR)
(72) Inventor: Kim, Byung Lip, 305-313 Daejeon (KR)
(74) Representative: Petraz, Gilberto Luigi

(57) **Abstract**

Disclosed are a rubber composition for tire treads including a fusion resin that is formed by chemically binding two or more resins with different softening points and a tire manufactured using the same. More particularly, a rubber composition for tire treads to maintain grip and durability during high-speed driving, and a tire manufactured using the same are disclosed.

## Description

### BACKGROUND OF THE INVENTION

### Field of the Invention

The present invention relates to a rubber composition for tire treads including resins with different softening points and a tire manufactured using the same, and more particularly to a rubber composition for tire treads to maintain grip and durability during high-speed driving, and a tire manufactured using the same.

### Description of the Related Art

In general, rubber compositions for tire treads of high-speed race cars are prepared by adding one resin type or a mixture of two or more resin types thereto, or the content of the added resin is increased, in order to increase grip. Alternatively, attempts to develop a resin with a softening point range have been made, and such a resin is used as an additive of the rubber compositions.

However, when the content of a resin or a mixture including two or more resin types is continuously increased, a serious problem such as processability decrease may occur. In addition, when a resin with a broad softening point range is used, a time point at which grip is exhibited is disadvantageously limited to a specific softening point.

Meanwhile, as another method of increasing grip on dry roads, there is a method of increasing the glass transition temperature (Tg) of a rubber composition by adding a large amount of a raw rubber material containing a high-styrene ingredient to the rubber composition for treads and, accordingly, increasing the dynamic loss coefficient (Tan δ ) on roads. However, this method also has a problem that durability and abrasion resistance of tires are decreased due to increased heating during driving.

### SUMMARY OF THE INVENTION

Therefore, the present invention has been made in view of the above problems, and it is an object of the present invention to provide a rubber composition for tire treads including resins with different softening points to maintain grip and durability during high-speed driving.

It is another object of the present invention to provide a tire manufactured using the rubber composition for tire treads.

In accordance with the present invention, the above and other objects can be accomplished by the provision of a rubber composition for tire treads including 100 parts by weight of a raw rubber material, 100 to 200 parts by weight of a filler, and 10 to 40 parts by weight of a wet masterbatch including a fusion resin, wherein the fusion resin is formed through chemical binding of terminals of two or more resins with different softening points.

The two or more resins with different softening points may be selected from resins with softening points of 30°C or more and less than 50°C, 50°C or more and less than 70°C, 70°C or more and less than 90°C, 90°C or more and less than 110°C, 110°C or more and less than 130°C, and 130°C or more and less than 150°C.

The fusion resin may have a weight-average molecular weight of 50 to 200 g/mol due to chemical binding of the terminals of the resins.

The wet masterbatch may include 100 parts by weight of a latex rubber, 50 to 200 parts by weight of a filler, and 10 to 60 parts by weight of the fusion resin.

In the wet masterbatch including the fusion resin, a terminal of a resin with a highest softening point among the resins forming the fusion resin and a terminal of the latex rubber may be coupled by an aminoalkoxysilane.

A terminal of the latex rubber may be modified into a hyper-branched polymer by the aminoalkoxysilane.

The raw rubber material may include 50 to 100 parts by weight of an emulsion-polymerized styrene-butadiene rubber including 35 to 45% by weight of styrene and 0 to 50 parts by weight of an emulsion-polymerized styrene-butadiene rubber including 20 to 25% by weight of styrene and 60 to 70% by weight of vinyl.

The filler may be any one selected from carbon black, silica and a mixture thereof.

The filler may have an iodine adsorption amount of 250 to 400 mg/g and a DBP oil adsorption amount of 100 to 140 ml/100 g and includes 20 to 150 parts by weight of carbon black.

In accordance with an aspect of the present invention, the above and other objects can be accomplished by the provision of a method of preparing a wet masterbatch including a fusion resin, the method including (a) a step of preparing a fusion resin by chemically binding terminals of two or more resins selected from resins with a softening point of 30°C or more and less than 50°C, 50°C or more and less than 70°C, 70°C or more and less than 90°C, 90°C or more and less than 110°C, 110°C or more and less than 130°C, and 130°C or more and less than 150°C; (b) reacting a terminal of a latex rubber with aminoalkoxysilane to modify the latex rubber into a hyper-branched form; and (c) coupling a terminal of a resin with a highest softening point among the resins forming the fusion resin with a terminal of the latex rubber using the aminoalkoxysilane.

The resin with a highest softening point may have a softening point of 130°C or more and less than 150°C.

A tire for high-speed racing according to another embodiment of the present disclosure may be manufactured using the rubber composition for tire treads.

### DETAILED DESCRIPTION OF THE INVENTION

Hereinafter, the present invention is described in more detail.

A rubber composition for tire treads according to an embodiment of the present invention includes 100 parts by weight of a raw rubber material, 100 to 200 parts by weight of a filler, and 10 to 40 parts by weight of a wet masterbatch including a fusion resin, wherein the fusion resin is formed through chemical binding of terminals of two or more resins with different softening points.

Hereinafter, each ingredient is described in detail.

### 1) Raw rubber material

In the rubber composition for tire treads, the raw rubber material includes, based on a total weight of the raw rubber material
i) 50 to 100 parts by weight of an emulsion-polymerized styrene-butadiene rubber (E-SBR) including 35 to 45% by weight of styrene and
ii) 0 to 50 parts by weight of a solution-polymerized styrene-butadiene rubber (S-SBR) including 20 to 25% by weight of styrene and 60 to 70% by weight of vinyl.

The emulsion-polymerized styrene-butadiene rubber (E-SBR) is generally prepared through radical polymerization, and the content of each of styrene and vinyl may be adjusted depending upon polymerization temperature. In general, styrene-butadiene rubbers prepared through the radical polymerization have long chains, relatively high molecular weights compared to solution-polymerized styrene butadiene rubber, and very broad molecular weight distribution (MWD) of 4 to 6.

Among such E-SBRs, i) E-SBR usable in the present invention includes 35 to 45% by weight of styrene. In addition, the content of vinyl in the butadiene is 30 to 60% by weight, and an oil is included therein.

In addition, the E-SBR may have a glass transition temperature (Tg) of -40 to -25°C.
i) E-SBR satisfying such characteristics has a lower glass transition temperature (Tg) than S-SBR and a small amount of vinyl. Accordingly, braking performance on wet roads is poor, but rolling resistance and abrasion resistance may be increased.
   In addition, i) the E-SBR includes a treated distillate aromatic extract (TDAE) oil. In particular, TDAE may be included in an amount of 25 to 50% by weight or 35 to 40% by weight based on a total weight of the E-SBR. As such, when an oil is included in the E-SBR, flexibility of the E-SBR reduced by styrene may be increased.
   When i) the E-SBR having the aforementioned constitutional characteristics and properties is included in an amount of 50 to 100 parts by weight based on a total weight of the raw rubber material, stable braking performance may be achieved even on icy roads.
   Meanwhile, the solution-polymerized styrene-butadiene rubber (S-SBR) may be generally prepared by a continuous method and a batch type method. S-SBR prepared through the continuous method has somewhat superior processability compared to the batch type method, but low-fuel-consumption performance is decreased by hysteresis loss occurring on a large scale due to a large amount of a material with a low molecular weight. On the other hand, molecular weight distribution (MWD) of S-SBR prepared according to the batch type method is 1.3 to 1.5, which is narrower than that of S-SBR prepared according to a continuous method. Accordingly, rolling resistance and low fuel consumption performance may be increased.
   Among such S-SBRs, ii) S-SBR usable in the present disclosure includes 20 to 25% by weight of styrene. In addition, the content of vinyl in the butadiene is 60 to 70% by weight. The S-SBR is prepared according to a batch type method and includes an oil.
   In addition, ii) the S-SBR may have a glass transition temperature (Tg) of -30 to -20°C.
   When S-SBR having the aforementioned characteristics is used, hysteresis of a tire tread increases and thus braking performance on dry and wet roads may be simultaneously increased.
ii) The S-SBR includes a TDAE oil. In particular, the TDAE oil may be included in an amount of 25 to 50% by weight, or 35 to 40% by weight based on a total weight of the S-SBR. When the oil is included within this range, flexibility of the S-SBR decreased by styrene may be increased.

In addition, the S-SBR may be coupled by silicon (Si). When molecules are connected to each other by such silicon coupling, the number of molecular terminals causing hysteresis may be decreased, and processability and low fuel consumption performance may be enhanced.

Coupling the S-SBR using silicon may be carried out in a method known in the art and is not limited to a specific method. For example, the S-SBR coupled by silicon may be prepared by copolymerizing styrene and 1,3-butadiene in an inactive solution using an alkyl lithium catalyst. In addition, the alkyl lithium catalyst may be used with a subsidiary catalyst or a catalyst modifier. The styrene-butadiene rubber is generated using the catalyst and then reaction thereof is terminated by adding a silicon compound. Here, as the silicon compound, silicon tetrachloride, trialkyl silicon chloride, dialkyl silicon dichloride, or alkyl silicon trichloride is preferred.

An S-SBR having the aforementioned constitutional characteristics and properties may be included in an amount of 0 to 50 parts by weight or 10 to 30 parts by weight based on a total weight of the raw rubber material. When the S-SBR is included within this range, braking performance on dry and wet roads is enhanced, and thus, it may be suitable for high-speed driving.

### 2) Filler

The filler may be a mixture including two or more fillers with different particle diameters. A total amount of the filler may be 100 to 200 parts by weight based on 100 parts by weight of the raw rubber material.

When the filler is used in an amount of less than 100 parts by weight, durability may be decreased during high-speed driving. When the filler is used in an amount of 200 parts by weight, processability may be decreased.

The two or more fillers with different particle diameters may be selected from carbon black, silica, calcium carbonate, clay (hydrated aluminum silicate), aluminum hydroxide, lignin, silicate, talc, and combinations thereof.

The carbon black may have an iodine (I₂) adsorption amount of 250 to 400 mg/g and a DBP oil adsorption amount of 100 to 140 ml/100 g, although the present invention is not limited thereto.

When the iodine (I₂) adsorption amount of the carbon black is greater than 250 mg/g, processability of the rubber composition for tires may be decreased. When the iodine (I₂) adsorption amount is greater than 400 mg/g, reinforcement due to carbon black, as a filler, may be decreased. In addition, when the DBP oil adsorption amount is greater than 100 ml/100 g, processability of the rubber composition may be decreased. When the DBP oil adsorption amount is less than 140 ml/100 g, reinforcement due to carbon black, as a filler, may be decreased.

Examples of the carbon black include furnace blacks (furnace carbon blacks) such as SAF, ISAF, HAF, MAF, FEF, SRF, GPF, APF, FF, CF, SCF, and ECF; acetylene black (acetylene carbon black); thermal blacks (thermal carbon blacks) such as FT and MT; channel blacks (channel carbon blacks) such as EPC, MPC, and CC; graphite, etc. There carbon blacks may be used alone or as a mixture of two or more thereof.

The silica may have a nitrogen surface area per gram (N₂SA) of 100 to 180 m²/g, and a cetyl trimethyl ammonium bromide (CTAB) surface area per gram of 110 to 170m²/g, although the present invention is not limited thereto.

When the nitrogen surface area per gram of the silica is less than 100m²/g, reinforcement due to silica, as a filler, may be decreased. When the nitrogen surface area per gram of the silica is greater than 180 m²/g, processability of the rubber composition may be decreased. In addition, the CTAB surface area per gram of the silica is less than 110 m²/g, reinforcement due to silica, as a filler, may be decreased. When the CTAB surface area per gram of the silica is greater than 170 m²/g, processability of the rubber composition may be decreased.

The silica may be prepared according to a wet method or a dry method. In addition, as the silica, ULTRASIL VN2 (manufactured by Degussa Ag), ULTRASIL VN3 (manufactured by Degussa Ag), Z1165MP (manufactured by Rhodia), Z165GR (manufactured by Rhodia), etc. commercially available may be used.

### 3) Wet masterbatch including fusion resin

The rubber composition for tire treads includes a wet masterbatch that includes a fusion resin.

In the present disclosure, the fusion resin is formed by chemically binding terminals of two or more resins with different softening points.

The two or more resins with different softening points may be selected from resins with softening points of 30°C or more and less than 50°C, 50°C or more and less than 70°C, 70°C or more and less than 90°C, 90°C or more and less than 110°C, 110°C or more and less than 130°C, and 130°C or more and less than 150°C.

As a resin with a softening point of 50°C or more and less than 70°C, any one selected from the group consisting of terpene based resins may be used.

As a resin with a softening point of 70°C or more and less than 90°C, any one selected from the group consisting of rosin based resins may be used.

As a resin with a softening point of 90°C or more and less than 110°C, any one selected from the group consisting of petroleum resins may be used.

As a resin with a softening point of 110°C or more and less than 130°C, any one selected from the group consisting of hydrogenated resins may be used.

As a resin with a softening point of 130°C or more and less than 150°C, any one selected from the group consisting of alkylphenolic resins may be used.

The chemical binding may be formed through a condensation reaction between a methyl group (-CH₃) and a carboxyl group (-COOH) at a resin terminal.

The weight-average molecular weight of the fusion resin may be 50 to 200 g/mol, and the fusion resin may be any one selected from the group consisting of terpene based resins, rosin based resins, petroleum resins, hydrogenated resins, and alkylphenolic resins.

The wet masterbatch including the fusion resin includes 100 parts by weight of a latex rubber, 50 to 200 parts by weight of a filler, and 10 to 60 parts by weight of the fusion resin.

In the wet masterbatch including the fusion resin, a terminal of a resin with a highest softening point among the resins forming the fusion resin may be coupled with a terminal of the latex rubber through aminoalkoxysilane. The resin with the highest softening point may have a softening point of 130°C or more and less than 150°C and a functional group, which is selected from the group consisting of a methyl group (-CH₃) and a carboxyl group (-COOH), at a terminal thereof.

A terminal of the latex rubber may be modified into a hyper-branched polymer by the aminoalkoxysilane.

A method of preparing the wet masterbatch including the fusion resin includes (a) a step of preparing a fusion resin by chemically binding terminals of two or more resins selected from resins with a softening point 30°C or more and less than 50°C, 50°C or more and less than 70°C, 70°C or more and less than 90°C, 90°C or more and less than 110°C, 110°C or more and less than 130°C, and 130°C or more and less than 150°C resin; (b) reacting a terminal of a latex rubber with an aminoalkoxysilane, thereby modifying the latex rubber into a hyper-branched form; and (c) coupling a terminal of a resin with a highest softening point among the resins forming the fusion resin with a terminal of the latex rubber using the aminoalkoxysilane.

### 4) Other additives

In addition, the rubber composition for tire treads may selectively, further include a variety of additives such as a vulcanizing agent, a vulcanization accelerator, a vulcanization acceleration aid, a coupling agent, an aging preventing agent, a softener, or an adhesive. The additives may be any one that is generally used in the art. The contents of additives are determined according to mixing ratios used in general rubber compositions for tire treads, and are not specifically limited.

As the vulcanizing agent, a sulfur-based vulcanizing agent, an organic peroxide, a resin vulcanizing agent, or a metal oxide such as magnesium oxide may be used.

As the sulfur-based vulcanizing agent, an inorganic vulcanizing agent such as sulfur powder (S), insoluble sulfur (S), precipitated sulfur (S), or colloidal sulfur, and an organic vulcanizing agent such as tetramethylthiuram disulfide (TMTD), tetraethylthiuram disulfide (TETD), or dithiodimorpholine may be used. In particular, as the sulfur-based vulcanizing agent, elemental sulfur, a vulcanizing agent that produces sulfur, e.g., an amine disulfide, or polymeric sulfur, may be used.

The organic peroxide may be any one selected from the group consisting of benzoyl peroxide, dicumyl peroxide, di-t-butyl peroxide, t-butyl cumyl peroxide, methyl ethyl ketone peroxide, cumene hydroperoxide, 2,5-dimethyl-2,5-di(t-butylperoxy)hexane, 2,5-dimethyl-2,5-di(benzoyl peroxy)hexane, 2,5-dimethyl-2,5-di(t-butylperoxy)hexane, 1,3-bis(t-butylperoxy propyl)benzene, di-t-butylperoxy-diisopropylbenzene, t-butylperoxy benzene, 2,4-dichlorobenzoyl peroxide, 1,1-dibutylperoxy-3,3,5-trimethylsiloxane, n-butyl-4,4-di-t-butylperoxy valerate, and combinations thereof.

The vulcanizing agent is preferably included in an amount of 0.5 parts to 4.0 parts by weight with respect to 100 parts by weight of the raw rubber. In this case, the vulcanizing agent exhibits appropriate vulcanizing effects and the raw rubber is less sensitive to heat and is chemically stable.

The vulcanization accelerator means an accelerator that accelerates the rate of vulcanization or facilities the retarding action in an initial vulcanization stage.

The vulcanization accelerator may be any one selected form the group consisting of sulfenamide based compounds, thiazole based compounds, thiuram based compounds, thiourea based compounds, guanidine based compounds, dithiocarbamic acid based compounds, aldehyde-amine based compounds, aldehyde-ammonia based compounds, imidazoline based compounds, xanthate based compounds and combinations thereof.

As the sulfenamide based vulcanization accelerators, any one sulfenamide based compound selected from the group consisting of, for example, N-cyclohexyl-2-benzothiazole sulfonamide (CBS), N-tert-butyl-2-benzothiazole sulfonamide (TBBS), N,N-dicyclohexyl-2-benzothiazole sulfenamide, N-oxydiethylene-2-benzothiazole sulfenamide, N,N-diisopropyl-2-benzothiazole sulfenamide and combinations thereof may be used.

As the thiazole based vulcanization accelerator, any one thiazole based compound selected from the group consisting of, for example, 2-mercaptobenzothiazole (MBT), dibenzothiazole disulfide (MBTS), sodium salts of 2-mercaptobenzothiazole, zinc salts of 2-mercaptobenzothiazole, copper salts of 2-mercaptobenzothiazole, cyclohexylamine salts of 2-mercaptobenzothiazole, 2-(2,4-dinitrophenyl)mercaptobenzothiazole, 2-(2,6-diethyl-4-morpholino thio)benzothiazole and combinations thereof may be used.

As the thiuram based vulcanization accelerator, ,for example, any one thiuram based compound selected from the group consisting of tetramethylthiuram disulfide (TMTD), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, pentamethylenethiuram tetrasulfide and combinations thereof may be used.

As the thiourea based vulcanization accelerator, any one thiourea based compound selected from the group consisting of, for example, thiocarbamide, diethylthiourea, dibutylthiourea, trimethylthiourea, di-ortho-tolylthiourea and combinations thereof may be used.

As the guanidine based vulcanization accelerator, any one guanidine based compound selected from the group consisting of, for example, diphenylguanidine, di-ortho-tolylguanidine, triphenylguanidine, ortho-tolylbiguanide, diphenylguanidine phthalate and combinations thereof may be used.

As the dithiocarbamic acid based vulcanization accelerator, any one dithiocarbamic acid based compound selected from the group consisting of, for example, zinc ethylphenyldithiocarbamate, zinc butylphenyldithiocarbamate, sodium dimethyldithiocarbamate, zinc dimethyldithiocarbamate, zinc diethyldithiocarbamate, zinc dibutyldithiocarbamate, zinc diamyldithiocarbamate, zinc dipropyldithiocarbamate, complex salts of zinc pentamethylenedithiocarbamate and piperidine, zinc hexadecylisopropyldithiocarbamate, zinc octadecylisopropyldithiocarbamate, zinc dibenzyldithiocarbamate, sodium diethyldithiocarbamate, piperidine pentamethylenedithiocarbamate, selenium dimethyldithiocarbamate, tellurium diethyldithiocarbamate, cadmium diamyldithiocarbamate and combinations thereof may used.

As the aldehyde amine based or aldehyde ammonia based vulcanization accelerator, an aldehyde amine based compound or an aldehyde ammonia based compound selected from the group consisting of, for example, acetaldehyde-aniline reaction products, butyraldehyde-aniline condensates, hexamethylenetetramine, acetaldehyde-ammonia reaction products and combinations thereof may be used.

As the imidazoline-based vulcanization accelerator, for example, an imidazoline-based compound such as 2-mercaptoimidazoline may be used, and as the xanthate based vulcanization accelerator, for example, a xanthate based compound such as zinc dibutyl xanthogenate may be used.

In order to maximize increase in productivity by increasing the rate of vulcanization, and to maximize improvement of rubber properties, the vulcanization accelerator may be included in an amount of 0.5 to 4.0 parts by weight with respect to 100 parts by weight of the raw rubber.

The vulcanization acceleration aid is a mixing agent used in combination with the vulcanization accelerator in order to perfect the accelerating effect, and may be any one selected from the group consisting of inorganic vulcanization acceleration aids, organic vulcanization acceleration aids, and combinations thereof.

As the inorganic vulcanization acceleration aid, any one selected from the group consisting of zinc oxide (ZnO), zinc carbonate, magnesium oxide (MgO), lead oxide, potassium hydroxide and combinations thereof may be used. As the organic vulcanization acceleration aid, any one selected from the group consisting of stearic acid, zinc stearate, palmitic acid, linoleic acid, oleic acid, lauric acid, dibutyl ammonium oleate, derivatives thereof and combinations thereof may be used.

In particular, zinc oxide and stearic acid may be used together as the vulcanization acceleration aid. In this case, zinc oxide is dissolved in stearic acid and forms an effective complex with the vulcanization accelerator, and thus, the complex produces free sulfur during the vulcanization reaction, thereby facilitating crosslinking of rubber.

When zinc oxide and stearic acid are used together, zinc oxide and stearic acid may be respectively used in amounts of 1 to 5 parts by weight and 0.5 to 3 parts by weight, in order to function as an adequate vulcanization acceleration aid. When the amounts of the zinc oxide and the stearic acid are below the range, vulcanization rate decreases and thus productivity may be deteriorated. When the amounts of the zinc oxide and the stearic acid exceed the range, scorching occurs and thus properties may be deteriorated.

The coupling agent may be any one selected from the group consisting of sulfide based silane compounds, mercapto based silane compounds, vinyl based silane compounds, amino based silane compounds, glycidoxy based silane compounds, nitro based silane compounds, chloro based silane compounds, methacrylic silane compounds, and combinations thereof. The coupling agent is preferably a sulfide based silane compound.

The sulfide based silane compound may be any one selected from the group consisting of bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 2-trimethoxysilylethyl-N,N-dimethylthiocarbamoyltetrasulfide, 3-trimethoxysilylpropylbenzothiazolyltetrasulfide, 3-triethoxysilylpropylbenzothiazoletetrasulfide, 3-trimethoxysilylpropylmethacrylatemonosulfide, 3-trimethoxysilylpropylmethacrylatemonosulfide, and combinations thereof.

The mercapto silane compound may be any one selected from the group consisting of 3-mercaptopropyltrimethoxysilane, 3-mercaptopropyltriethoxysilane, 2-mercaptoethyltrimethoxysilane, 2-mercaptoethyltriethoxysilane and combinations thereof. The vinyl based silane compound may be any one selected from the group consisting of ethoxysilane, vinyltrimethoxysilane and combinations thereof. The amino based silane compound may be any one selected from the group consisting of 3-aminopropyltriethoxysilane, 3-aminopropyltrimethoxysilane, 3-(2-aminoethyl)aminopropyltriethoxysilane, 3-(2-aminoethyl)aminopropyltrimethoxysilane and combinations thereof.

The glycidoxy based silane compound may be any one selected from the group consisting of γ-glycidoxypropyltriethoxysilane, γ-glycidoxypropyltrimethoxysilane, γ-glycidoxypropylmethyldiethoxysilane, γ-glycidoxypropylmethyldimethoxysilane and combinations thereof. The nitro based silane compound may be any one selected from the group consisting of 3-nitropropyltrimethoxysilane, 3-nitropropyltriethoxysilane and combinations thereof. The chloro based silane compound may be any one selected from the group consisting of 3-chloropropyltrimethoxysilane, 3-chloropropyltriethoxysilane, 2-chloroethyltrimethoxysilane, 2-chloroethyltriethoxysilane and combinations thereof.

The methacrylic silane compound may be any one selected from the group consisting of γ-methacryloxypropyl trimethoxysilane, γ-methacryloxypropyl methyldimethoxysilane, γ-methacryloxypropyl dimethylmethoxysilane and combinations thereof.

The coupling agent may be included in an amount of 1 to 20 parts by weight based on 100 parts by weight of the raw rubber material in order to increase dispersability of the silica. When the content of the coupling agent is less than 1 part by weight, dispersability of silica is not sufficiently increased, and thus, processability of the rubber or low fuel consumption performance may be decreased. When the content of the coupling agent is greater than 20 parts by weight, interaction between silica and the rubber is too strong. Accordingly, low fuel consumption performance may be superior, but braking performance may be greatly decreased.

The softener is added to the rubber composition so as to facilitate processing by imparting plasticity to the rubber or decrease the hardness of vulcanized rubber. The softener means a material such as an oil used when rubber is mixed or prepared. The softener means a process oil or other oils included in a rubber composition. As the softener, any one selected from the group consisting of petroleum oils, vegetable oils, and combinations thereof may be used, but the present invention is not limited thereto.

The softening agent is added to a rubber composition in order to facilitate processing by imparting plasticity to rubber, or in order to decrease hardness of vulcanized rubber, and means processed oils or other materials that are used when rubber is blended or prepared. The softening agent means a process oil or any one of oils included in other rubber compositions. As the softening agent, any one selected from the group consisting of petroleum based oil, plant oils and combinations thereof may be used, but the present invention is not limited thereto.

As the petroleum based oil, any one selected from the group consisting of paraffin based oils, naphthene based oils, aromatic oils, and combinations thereof may be used.

Representative examples of the paraffin-based oils include P-1, P-2, P-3, P-4, P-5, P-6, etc. manufactured by Michang Oil Industrial Co., Ltd. Representative examples of the naphthene-based oils include N-1, N-2, N-3, etc. manufactured by Michang Oil Industrial Co., Ltd., and representative examples of the aromatic oils include A-2, A-3, etc. manufactured by Michang Oil Industrial Co., Ltd.

However, along with recently increased environmental awareness, it is known that, when the content of polycyclic aromatic hydrocarbons (hereinafter referred to as "PAHs") included in the aromatic oils is 3% or more, carcinogenicity is high. Accordingly, treated distillate aromatic extract (TDAE) oils, mild extraction solvate (MES) oils, residual aromatic extract (RAE) oils, or heavy naphthenic oils may be preferably used.

In particular, in the oil used as the softening agent, a total content of PAH components is 3% or less with respect to the total amount of the oil. Preferably, TDAE oils, wherein a kinematic viscosity is 95 or higher (210°F), a content of aromatic components in softening agent is 15 to 25 wt%, a content of naphthene based components is 27 to 37 wt%, and a content of paraffin based components is 38 to 58 wt%, may be used.

The TDAE oils enhance low-temperature characteristics and fuel consumption performance of a tire tread, and also have advantageous characteristics against environmental factors such as PAHs having cancer induction.

As the plant oil, any one selected from the group consisting of castor oil, cotton seed oil, linseed oil, canola oil, soybean oil, palm oil, coconut oil, peanut oil, pine oil, pine tar, tall oil, corn oil, rice bran oil, safflower oil, sesame oil, olive oil, sunflower oil, palm kernel oil, camellia oil, jojoba oil, macadamia nut oil, safflower oil, tung oil, and combinations thereof may be used.

The softening agent is preferably used in an amount of 0 to 150 parts by weight by weight with respect to 100 parts by weight of the raw rubber, from the viewpoint of improving processability of the raw rubber.

The aging preventing agent is an additive used to stop chain reactions in which the tire is auto-oxidized by oxygen. As the aging preventing agent, any one selected from the group consisting of amines, phenols, quinolines, imidazoles, carbamic acid metal salts, waxes and combinations thereof may be appropriately selected and used.

As the amine based aging preventing agent, any one selected from the group consisting of N-phenyl-N'-(1,3-dimethyl)-p-phenylenediamine, N-(1,3-dimethylbutyl)-N'-phenyl-p-phenylenediamine, N-phenyl-N'-isopropyl-p-phenylenediamine, N,N'-diphenyl-p-phenylenediamine, N,N'-diaryl-p-phenylenediamine, N-phenyl-N'-cyclohexyl-p-phenylenediamine, N-phenyl-N'-octyl-p-phenylenediamine and combinations thereof may be used. As the phenol based aging preventing agent, any one selected from the group consisting of 2,2'-methylenebis(4-methyl-6-tert-butylphenol), 2,2'-isobutylidenebis(4,6-dimethylphenol), 2,6-di-t-butyl-p-cresol and combinations thereof may be used. As the quinoline based aging preventing agent, 2,2,4-trimethyl-1,2-dihydroquinoline and derivatives thereof may be used, particularly, any one selected from the group consisting of 6-ethoxy-2,2,4-trimethyl-1,2-dihydroquinoline, 6-anilino-2,2,4-trimethyl-1,2-dihydroquinoline, 6-dodecyl-2,2,4-trimethyl-1,2-dihydroquinoline, and combinations thereof may be used. As the wax, waxy hydrocarbons may be preferably used.

When, in addition to the aging preventing action, conditions such as high solubility in rubber and low volatility, nonreactivity with rubber, and non-inhibition of vulcanization are considered, the aging preventing agent may be included in an amount of 1 to 6 parts by weight with respect to 100 parts by weight of the raw rubber.

The adhesive contributes to enhancement of the properties of rubber by further enhancing adhesion between rubber and rubber, and improving compatibility, dispersibility and processability of other additives such as a filler.

As the adhesive, natural resin based adhesives such as rosin based resins and terpene based resins, and synthetic resin based adhesives, such as petroleum resins, coal tar, and alkylphenol based resins may be used.

As the rosin-based resins, any one selected from the group consisting of rosin resin, a rosin ester resin, a hydrogenated rosin ester resin, derivatives thereof, and combinations thereof may be used. As the terpene based resins, any one selected from the group consisting of a terpene resin, a terpene phenol resin, and combinations thereof may be used.

As the petroleum resins, any one selected from the group consisting of aliphatic resins, acid-modified aliphatic resins, alicyclic resins, hydrogenated alicyclic resins, aromatic (C9) resins, hydrogenated aromatic resins, C5-C9 copolymer resins, styrene resins, styrene copolymer resins, and combinations thereof may be used.

The coal tar may be a coumarone-indene resin.

As the alkylphenol resins, p-tert-alkylphenol formaldehyde resins may be used, and the p-tert-alkylphenol formaldehyde resin may be any one selected from the group consisting of p-tert-butylphenol formaldehyde resin, p-tert-octylphenol formaldehyde, and combinations thereof.

The adhesive may be included in an amount of 2 to 4 parts by weight with respect to 100 parts by weight of the raw rubber. When the content of the adhesive is less than 2 parts by weight with respect to 100 parts by weight of the raw rubber, adhesion performance may be deteriorated, and when the content of the adhesive exceeds 4 parts by weight, rubber properties may be deteriorated.

The rubber composition for tire treads may be prepared through a general two-step process. That is, the rubber composition may be prepared in an appropriate mixer, using a first step (called "non-production step" of thermomechanically treating or kneading at high temperature of 110°C to 190°C, preferably at high temperature of 130°C to 180°C and a second step (called "production" step) of mechanically treating typically at low temperature of less than 110°C, e.g., 40°C to 100°C during a finishing step in which a cross-linking system is mixed, but the present invention is not limited thereto.

A tire for high-speed racing according to an embodiment of the present invention is manufactured using the rubber composition for tire treads.

The rubber composition for tire treads may be included not only in a tread (tread cap and tread base), but also in various rubber constituents that form the tire. Examples of the rubber constituents include side walls, side wall inserts, apexes, chafers, wire coats, inner liners, etc.

A tire according to another embodiment of the present invention is manufactured using the rubber composition for tire treads. A method of manufacturing a tire using the rubber composition for tire treads may be any one of conventional manufacturing methods, and detailed description therefore is omitted.

Examples of the tire include tires for passenger cars, tires for race cars, tires for airplanes, tires for airplanes, tires for agricultural machines, tires for off-road vehicles, truck tires, or bus tires. In addition, the tire may be a radial tire or a bias tire, and the radial tire is preferable.

Hereinafter, the present invention will be described in detail by way of examples so that those having ordinary skill in the art can easily carry out the invention. However, the present invention can be realized in various different forms, and is not intended to be limited to the examples described herein.

### [Preparation example: preparation of rubber composition]

Rubber compositions for tire tread according to an example and comparative examples were prepared using compositions summarized in Table 1 below. The rubber compositions were prepared according to a general rubber composition method.

**[Table 1]**

| Mixture | Comparative Example 1 | Comparative Example 2 | Comparative Example 3 | Comparative Example 4 | Comparative Example 5 | Comparative Example 6 | Example 1 |
|---|---|---|---|---|---|---|---|
| WMB¹⁾ | 96.25 | 96.25 | 96.25 | 96.25 | 96.25 | 96.25 | - |
| WMB-F²⁾ | - | - | - | - | - | - | 96.25 |
| Resin(60°C)³⁾ | 20 | - | - | - | - | - | - |
| Resin(80°C)³⁾ | - | 20 | - | - | - | - | - |
| Resin(100°C) ³⁾ | - | - | 20 | - | - | - | - |
| Resin (120°C) ³⁾ | - | - | - | 20 | - | - | - |
| Resin(140°C) ³⁾ | - | - | - | - | 20 | - | - |
| Resin-F⁴⁾ | - | - | - | - | - | 20 | - |
| SBR⁵⁾ | 41.25 | 41.25 | 41.25 | 41.25 | 41.25 | 41.25 | 41.25 |
| Carbon black⁶⁾ | 100 | 100 | 100 | 100 | 100 | 100 | 100 |
| Process oil | 120 | 120 | 120 | 120 | 120 | 120 | 120 |
| Zinc oxide | 3 | 3 | 3 | 3 | 3 | 3 | 3 |
| Stearic acid | 1 | 1 | 1 | 1 | 1 | 1 | 1 |
| Antioxidant | 4 | 4 | 4 | 4 | 4 | 4 | 4 |
| Wax | 2 | 2 | 2 | 2 | 2 | 2 | 2 |
| Promoter(CZ) | 2 | 2 | 2 | 2 | 2 | 2 | 2 |
| Sulfur | 1.5 | 1.5 | 1.5 | 1.5 | 1.5 | 1.5 | 1.5 |

1) WMB: Wet masterbatch was prepared by mixing 100 parts by weight of a latex rubber (SBR1721 latex manufactured by KPCC), 140 parts by weight of a softener (TDAE oil), and 140 parts by weight of a filler (HP1107 C/B manufactured by OEC).
2) WMP-F: Wet masterbatch including a fusion resin was modified into a hyper-branched polymer by reacting a) a terminal of the latex rubber (SBR1721 latex) with alkoxysilane.
   b) Terminals of 3 parts by weight of a resin with a softening point of 40°C, 6 parts by weight of a resin with a softening point of 60°C, 9 parts by weight of a resin with a softening point of 80°C, 12 parts by weight of a resin with a softening point of 100°C, 13.2 parts by weight of a resin with a softening point of a 120°C, and 16.8 parts by weight of a resin with a softening point of 140°C were chemically bound to one another, thereby preparing a fusion resin.
   c) A terminal of the resin with a softening point of 140°C was chemically bound with a terminal of the latex rubber.
   d) The wet masterbatch was prepared by mixing 100 parts by weight of the latex rubber (SBR1721 latex), 20 parts by weight of the fusion resin, 120 parts by weight of the softener (TDAE oil), and 140 parts by weight of the filler (HP1107 C/B).
3) Resin: A resin for testing, manufactured by KOLON, was used. A terpene based resin was used as the resin with a softening point of 60°C, a rosin based resin was used as the resin with a softening point of 80°C, a petroleum resin was used as the resin with a softening point of 100°C, a hydrated resin was used as the resin with a softening point of 120°C, and an alkylphenolic resin was used as the resin with a softening point of 140°C.
4) Resin-F: Terminals of 1.0 part by weight of the resin with a softening point of 40°C, 2.0 parts by weight of the resin with a softening point of 60°C, 3.0 parts by weight of the resin with a softening point of 80°C, 4.4 parts by weight of the resin with a softening point of 120°C, and 5.6 parts by weight of the resin with a softening point of 140°C were chemically bound to one another, thereby preparing a fusion resin (Resin-F).
5) SBR: A styrene-butadiene rubber VSL2438-2HM manufactured by Lanxess was used.
6) Carbon black: HP11107 (Iodine (I₂) adsorption amount: 130 ∼ 250 mg/g, DBP oil adsorption amount: 120 to 140 ml/100 g) manufactured by OEC was used.

### <Comparative Example 1>

In accordance with a mixing ratio summarized in Table 1, 100 parts by weight of a latex rubber (SBR1721 latex manufactured by KPCC), 140 parts by weight of a softener (TDAE Oil), and 140 parts by weight of a filler (HP1107 C/B manufactured by OEC) were mixed, thereby preparing a wet masterbatch. A rubber composition for tire treads was prepared using the wet masterbatch, a resin with a softening point of 60°C for testing, manufactured by KOLON, and other additives.

### <Comparative Examples 2 to 5>

A rubber composition for tire treads was prepared in the same manner as in Comparative Example 1, except that resins respectively having softening points of 80°C, 100°C, 120°C, and 140°C, manufactured by KOLON, were used.

### <Comparative Example 6>

In accordance with the mixing ratio summarized in Table 1, a rubber composition for tire treads was prepared using wet masterbatch prepared by mixing 100 parts by weight of a latex rubber (SBR1721 latex manufactured by KPCC), 140 parts by weight of a softener (TDAE Oil), and 140 parts by weight of a filler (HP1107 C/B manufactured by OEC), 20 parts by weight of a fusion resin prepared by chemically binding each terminal of 1.0 part by weight of a resin with a softening point of 40°C, 2.0 parts by weight of a resin with a softening point of 60°C, 3.0 parts by weight of a resin with a softening point of 80°C, 4.0 parts by weight of a resin with a softening point of 100°C, 4.4 parts by weight of a resin with a softening point of 120°C, and 5.6 parts by weight of a resin with a softening point of 140°C to one another, and other additives.

### <Example 1>

a) A terminal of the latex rubber (SBR1721 latex) was modified into a hyper-branched polymer through reaction with alkoxysilane.
b) Terminals of 1.0 parts by weight of a resin with a softening point of 40°C, 2.0 parts by weight of a resin with a softening point of 60°C, 3.0 parts by weight of a resin with a softening point of 80°C, 4.0 parts by weight of a resin with a softening point of 100°C, 4.4 parts by weight of a resin with a softening point of a 120°C, and 5.6 parts by weight of a resin with a softening point of 140°C were chemically bound to one another, thereby preparing a fusion resin.
c) A terminal of the resin with a softening point of 140°C was chemically bound with a terminal of the latex rubber.
d) The wet masterbatch was prepared by mixing 100 parts by weight of the latex rubber (SBR1721 latex), 20 parts by weight of the fusion resin, 120 parts by weight of the softener (TDAE oil), and 140 parts by weight of the filler (HP1107 C/B).

### [Experimental example: Property measurement of prepared rubber compositions]

Properties of rubber specimens prepared according to the example and the comparative examples were measured. Results are summarized in Table 2 below.

**[Table 2]**

| Properties | Comparative Example 1 | Comparative Example 2 | Comparative Example 3 | Comparative Example 4 | Comparative Example 5 | Comparative Example 6 | Example 1 |
|---|---|---|---|---|---|---|---|
| Hardness | 67 | 68 | 68 | 67 | 68 | 67 | 67 |
| 20°C Tan *δ* | 0.255 | 0.260 | 0.264 | 0.269 | 0.275 | 0.297 | 0.32 1 |
| Heating (Delta T, °C) | 75 | 80 | 82 | 87 | 95 | 102 | 110 |

1) Hardness (Shore A) was measured according to DIN 53505. Hardness means handling stability. Handling stability is superior with increasing hardness.
2) 20°C Tan *δ* : Is a dynamic loss coefficient measured by means of a flexometer manufactured by GABO. Braking performance on dry roads is superior with increasing 20°C Tan *δ* .
3) Heating (Delta T): Indicates a virtual heating value of a rubber under repeated dynamic strain, measured by means of a heating tester manufactured by MTS.

Referring to Table 2, it can be confirmed that hardness values of Example 1 and Comparative Examples 1 to 6 are maintained in a similar state.

However, it can be confirmed that braking performance on dry roads of Example 1 is remarkably increased, compared to those of Comparative Examples 1 to 6.

Meanwhile, in the case of racing tires, grip is superior when heating performance is superior. Referring to heating values of Table 2, it can be predicted that grip of Example 1 according to the present invention will be superior.

### [Experimental Example 2: Tire property measurement]

A tire for real high-speed racing was manufactured using a rubber composition for tire treads prepared according to each of Example 1 and Comparative Examples 1 to 6. Braking performance and average lap time (time taken for turning around a stadium 10 times /10) were evaluated on a dry road and are summarized in Table 3.
- Standard of manufactured tires: 240/640R18 F200

**[Table 3]**

| Properties | Comparative Example 1 | Comparative Example 2 | Comparat ve Example 3 | Comparative Example 4 | Comparative Example 5 | Comparative Example 6 | Example 1 |
|---|---|---|---|---|---|---|---|
| Performance index on dry road | 92 | 95 | 98 | 100 | 102 | 109 | 130 |
| Average lap time (min:sec) | 2:10 | 2:06 | 2:03 | 2:00 | 1:55 | 1:50 | 1:42 |

1) Braking performance on dry roads: Braking performances on dry roads are indexed based on 100 of a braking performance index of Comparative Example 4. Braking performance is superior with increasing performance index.
2) Average lap time: Time taken for turning around a stadium 10 times /10. Grip and durability can be determined through the average lap time. Grip and durability are superior with decreasing average lap time.

Referring to Table 3, it can be confirmed that the performance index on dry roads and the average lap time of Example 1, in which the masterbatch including the fusion resin that includes resins with different softening points is used, are remarkable increased, compared to those of Comparative Examples 1 to 5, in which a fusion resin is not used, and Comparative Example 6, in which a fusion resin is used but chemical binding between a masterbatch and terminals is not performed.

As apparent from the above description, the present invention provides a rubber composition for tire treads including two or more resins with different softening points, thereby providing tires for high-speed racing having high-speed driving grip and durability.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A rubber composition for tire treads, comprising:
100 parts by weight of a raw rubber material,
100 to 200 parts by weight of a filler, and
10 to 40 parts by weight of a wet masterbatch comprising a fusion resin,
wherein the fusion resin is formed through chemical binding of terminals of two or more resins with different softening points.

2. The rubber composition according to claim 1, wherein the two or more resins with different softening points are selected from resins with softening points of 30°C or more and less than 50°C, 50°C or more and less than 70°C, 70°C or more and less than 90°C, 90°C or more and less than 110°C, 110°C or more and less than 130°C, and 130°C or more and less than 150°C.

3. The rubber composition according to claim 1, wherein the fusion resin has a weight-average molecular weight of 50 to 200 g/mol due to chemical binding of the terminals of the resins.

4. The rubber composition according to claim 1, wherein the wet masterbatch comprises:
100 parts by weight of a latex rubber,
50 to 200 parts by weight of a filler, and
10 to 60 parts by weight of the fusion resin.

5. The rubber composition according to claim 4, wherein, in the wet masterbatch comprising the fusion resin, a terminal of a resin with a highest softening point among the resins forming the fusion resin and a terminal of the latex rubber are coupled by aminoalkoxysilane.

6. The rubber composition according to claim 5, wherein a terminal of the latex rubber is modified into a hyper-branched polymer by the aminoalkoxysilane.

7. The rubber composition according to claim 1, wherein the raw rubber material comprises:
50 to 100 parts by weight of an emulsion-polymerized styrene-butadiene rubber comprising 35 to 45% by weight of styrene and
0 to 50 parts by weight of an emulsion-polymerized styrene-butadiene rubber comprising 20 to 25% by weight of styrene and 60 to 70% by weight of vinyl.

8. The rubber composition according to claim 1, wherein the filler is any one selected from carbon black, silica and a mixture thereof.

9. The rubber composition according to claim 8, wherein the filler has an iodine an adsorption amount of 250 to 400 mg/g and a DBP oil adsorption amount of 100 to 140 ml/100 g and comprises 20 to 150 parts by weight of carbon black.

10. A method of a wet masterbatch including a fusion resin, the method comprising:
preparing a fusion resin by chemically binding terminals of two or more resins selected from resins with a softening point of 30°C or more and less than 50°C, 50°C or more and less than 70°C, 70°C or more and less than 90°C, 90°C or more and less than 110°C, 110°C or more and less than 130°C, and 130°C or more and less than 150°C;
reacting a terminal of a latex rubber with aminoalkoxysilane to modify the latex rubber into a hyper-branched form; and
coupling a terminal of a resin with a highest softening point among the resins forming the fusion resin with a terminal of the latex rubber using the aminoalkoxysilane.

11. The method according to claim 10, wherein the resin with a highest softening point has a softening point of 130°C or more and less than 150°C.

12. A tire for high-speed racing manufactured using the rubber composition for tire treads according to claim 1.
